# EUROPEAN PATENT SPECIFICATION

(11) **EP 1 184 168 B1**
(45) Date of publication and mention of the grant of the patent: **06.05.2004**
(21) Application number: 01500179.5
(22) Date of filing: 11.07.2001
(51) Int. Cl.: B32B 27/12, B32B 21/10, B32B 27/32, B60R 13/01, B60R 13/02

(54) **A laminated material, a process for the production thereof and corresponding use**
Verbundwerkstoff, Verfahren zu dessen Herstellung und Verwendung
Produit multicouche, son procédé de fabrication et son utilisation

(30) Priority: 30.08.2000 ES 200002148
(43) Date of publication of application: 06.03.2002
(73) Proprietor: Magna Emfisint Automotive S.A., 08227 Terrassa (Barcelona) (ES)
(72) Inventor: Roca, Xavier Permanyer, 08222 Terrassa (Barcelona) (ES); Diaz, Jorge Elias Romero, 08222 Terrassa (Barcelona) (ES)
(74) Representative: Curell Aguilà, Mireia

(56) References cited:
- WO-A-99/55520
- FR-A- 2 690 221

## Description

The invention refers to a laminated material of the type comprising a plurality of layers of diverse materials.

Laminated materials are known that comprise layers of wood and textile fibers. For example, they are used for the production of automobile components, such as for example separation trays between the passenger compartment and the boot, internal door linings, etc. Document WO-A-99/55520 describes a method for producing an interior fitting for vehicles. According to the method, a shaped wooden part with a visible side and a back is provided with a plastic reinforcement layer on the back. The objective is to provide a particularly economical way of producing an interior fitting. To this end, the shaped wooden part is placed in a press that has a bearing surface which essentially corresponds to the surface contour of the shaped wooden part on the visible side. The visible side of the shaped wooden part is then placed on the bearing surface. A fibre-reinforced plastic material is heated to a processing temperature at which it is plastically deformable, applied to the back of the shaped wooden part and connected to said back with a positive fit by exerting pressure.

In other cases, these automobile components are produced with other technologies, such as with injected plastic materials, with materials prepared from sawdust and polypropylene, etc.

These automobile components should satisfy a number of technical characteristics, such as good rigidity, good appearance, good reciclability, possibility of producing complex figures, etc.

On the other hand, it is always interesting that automobile components should have the lowest possible weight, since this redounds in a lower vehicle weight, which implies a number of improvements (better performance, lower consumption, lower inertia, etc).

The automobile component market is highly competitive, whereby the production cost is also always an extremely important factor.

It is an object of the invention to provide a laminated material wherein the foregoing parameters are improved. This aim is achieved by means of a laminated material that comprises a plurality of layers of diverse materials, characterized in that it comprises a intermediate layer of wood, a first layer of a textile material comprising a mixture of natural fiber and polyolefin fiber, and a second layer of textile material comprising a mixture of natural fiber and polyolefin fiber, where the intermediate layer of wood is between the first layer of textile material and the second layer of textile material, and where the intermediate layer of wood is provided with at least one hole allowing the two layers adjacent to the intermediate layer of wood to make mutual contact. The two layers of textile material are adjacent to the intermediate layer of wood that is positioned between both layers of textile material. Preferably the density of each of said intermediate layer of wood, first layer of textile material and second layer of textile material ranges from 200 to 1200 g/m².

Optionally more layers can be added to the laminated material. Thus, one or two decorative layers of moquette or textile material may be added thereto, for each of the visible surfaces of the laminated material. These moquettes preferably have a density greater than or equal to 200 g/m², such as for example 300 g/m². It is also possible to add one or two layers of a very fine textile material, of a density ranging approximately from 80 to 120 g/m², commonly known as "fliselin". It is possible to combine the two previous alternatives, by adding a moquette layer to one of the visible surfaces of the laminated material and a "fliselin" layer to the other visible surface of the laminated material.

To improve the adherence between the layers forming the laminated material, it is possible to add a polythene film. This polythene film may be discretionally located between any two layers between which it is wanted to improve the adherence.

The natural fiber is preferably linen, jute or cotton or a mixture of at least two of the foregoing materials, and the polyolefin is preferably polypropylene. The polypropylene content in the layers of textile material is preferably less than 70 wt%, and the content of natural fiber in the layers of textile material is preferably above 40 wt%. It allows a good combination of mechanical properties-weight-cost to be achieved.

Advantageously the thickness of the layer of wood ranges from 0.5 mm to 4 mm, and it may be either a single sheet or a sheet of plywood.

It is possible to produce laminated materials having more layers. Thus, for example, it is possible to include in the laminated material a second intermediate layer of wood and a third layer of textile material. Thus a ensemble of five layers would be formed (first layer of textile material, first intermediate layer of wood, second layer of textile material, second intermediate layer of wood, third layer of textile material), apart from any decorative and adherence enhancement layers.

Another optional improvement consists in that the second intermediate layer of wood is also provided with holes allowing the two layers of textile material adjacent the second intermediate layer of wood to make mutual contact. During the production process the ensemble is heated, and a certain pressure is applied thereto. The textile material flows into the holes and both layers make mutual contact, becoming welded together. The adherence of the ensemble is thus notably enhanced.

The invention also relates to a process for the production of a laminated material of the type described above. The process is characterized in that it comprises a step of forming a stack of the diverse layers that will be shaped into laminated material, a step of heating the stack to a temperature ranging from 170°C to 240°C, and a step of pressing and die cutting the heated stack in a press at a pressure in excess of 80 bar. Optionally, where one or more of the layers of wood contain holes, there is an additional step of die cutting the holes. The preferred heating temperatures range from 205°C to 210°C.

Finally, the invention relates to a use of a laminated material according to the invention. The use is characterized in that it is for the production of automobile components, preferably for the production of separation trays between the passenger compartment and the boot, internal boot linings, internal door linings, and internal side linings.

As an embodiment there may be cited a laminated material composed of:
a - an upper layer, of 100% polypropylene fiber decorative dilour moquette of 300 g/m2 weight (dilour is a trademark of Oskar Dilo Maschinenfabrik).
b - a 50% polypropylene fiber/50% cotton fiber layer of textile material, of 800 g/m2 weight.
c- a 1 mm thick layer of wood.
d- a second layer of textile material as in b above
e- a second layer of wood as in c above
f- a third layer of textile material as in b above
g- a 100% of polypropylene fiber layer of fliselina of 100 g/m2 weight.

The production process consists of a prior die cutting of the sheets of wood, to produce the holes, stacking of the layers b to f, heating of the stack platens heated to 210°C for 90 s and at a pressure of 120 bar, addition of the upper layer a and of the lower surface g, followed by forming and die cutting of the ensemble in a press at 120 bar for 60 s.

## Claims

1. A laminated material of the type comprising a plurality of layers of diverse materials, **characterized in that** it comprises a intermediate layer of wood, a first layer of a textile material comprising a mixture of natural fiber and polyolefin fiber, and a second layer of textile material comprising a mixture of natural fiber and polyolefin fiber, where said intermediate layer of wood is between said first layer of textile material and said second layer of textile material, and where said intermediate layer of wood is provided with at least one hole allowing the two layers adjacent to said intermediate layer of wood to make mutual contact.

2. The laminated material according to claim 1, **characterized in that** it comprises additionally at least one decorative surface layer of moquette or textile material.

3. The laminated material according to claim 1 or claim 2, **characterized in that** it comprises additionally at least one textile material surface layer, of a density ranging from 80 to 120 g/m².

4. The laminated material according to at least one of claims 1 to 3, **characterized in that** between at least two of any of said layers there is a polythene film.

5. The laminated material according to at least one of claims 1 to 4, **characterized in that** said natural fiber of said first layer and of said second layer is linen, jute or cotton or a mixture of at least two of these materials.

6. The laminated material according to at least one of claims 1 to 5, **characterized in that** said polyolefin is polypropylene.

7. The laminated material according to claim 6, **characterized in that** the polypropylene content in said first layer and second layer of textile material is less than 70 wt%.

8. The laminated material according to at least one of claims 1 to 7, **characterized in that** the content of natural fiber in said layers of textile material is above 40 wt%.

9. The laminated material according to at least one of claims 1 to 8, **characterized in that** the thickness of said layer of wood ranges from 0.5 mm to 4 mm.

10. The laminated material according to at least one of claims 1 to 9, **characterized in that** the density of each of said intermediate layer of wood, first layer of textile material and second layer of textile material ranges from 200 to 1200 g/m².

11. The laminated material according to at least one of claims 1 to 10, **characterized in that** it comprises a second intermediate layer of wood and a third layer of textile material, where said second intermediate layer of wood is between said second layer of textile material and said third layer of textile material.

12. The laminated material according to claim 11, **characterized in that** said second intermediate layer of wood is provided with at least one hole allowing the two layers adjacent to said second intermediate layer of wood to make mutual contact.

13. A process for the production of a laminated material according to at least one of claims 1 to 12, **characterized in that** it comprises a step of forming a stack of said at least two layers of textile material and said at least one intermediate layer of wood, a step of heating said stack to a temperature ranging from 170°C to 240°C, and a step of pressing and die cutting said heated stack in a press at a pressure in excess of 80 bar.

14. The process according to claim 13, **characterized in that** it comprises, additionally, a step of die cutting said at least one hole in at least one of said layers of wood.

15. The use of a laminated material according to at least one of claims 1 to 12 for the production of automobile components.

16. The use according to claim 15, **characterized in that** said components are included in the group formed by separation trays between the passenger compartment and the boot, internal boot linings, internal door linings, and internal side linings.

## Patentansprüche

1. Laminatverbundmaterial von dem Typ, der eine Mehrzahl von Schichten diverser Materialien umfasst, **dadurch gekennzeichnet, dass** es eine Zwischenschicht aus Holz umfasst, eine erste Schicht aus einem Textilmaterial umfassend eine Mischung aus Naturfaser und Polyolefinfaser und eine zweite Schicht aus Textilmaterial umfassend eine Mischung aus Naturfaser und Polyolefinfaser, wo die Zwischenschicht aus Holz zwischen der ersten Schicht aus Textilmaterial und der zweiten Schicht aus Textilmaterial vorhanden ist, und wo die Zwischenschicht aus Holz mit mindestens einem Durchtritt versehen ist, was den beiden Schichten neben der Zwischenschicht aus Holz ermöglicht, miteinander in Kontakt zu treten.

2. Laminatverbundmaterial nach Anspruch 1, **dadurch gekennzeichnet, dass** es zusätzlich mindestens eine dekorative Oberflächenschicht aus Moquette oder Textilmaterial umfasst.

3. Laminatverbundmaterial nach Anspruch 1 oder Anspruch 2, **dadurch gekennzeichnet, dass** es zusätzlich mindestens eine Textilmaterialoberflächenschicht umfasst, mit einer Dichte im Bereich von 80 bis 120 g/m² .

4. Laminatverbundmaterial nach mindestens einem der Ansprüche 1 bis 3, **dadurch gekennzeichnet, dass** zwischen mindestens zweien irgendwelcher der Schichten ein Polythenfilm vorhanden ist.

5. Laminatverbundmaterial nach mindestens einem der Ansprüche 1 bis 4, **dadurch gekennzeichnet, dass** die Naturfaser der ersten Schicht und der zweiten Schicht Leinen, Jute oder Baumwolle oder eine Mischung mindestens zweier dieser Materialien ist.

6. Laminatverbundmaterial nach mindestens einem der Ansprüche 1 bis 5, **dadurch gekennzeichnet, dass** das Polyolefin Polypropylen ist.

7. Laminatverbundmaterial nach Anspruch 6, **dadurch gekennzeichnet, dass** der Polypropylengehalt in der ersten Schicht und der zweiten Schicht aus Textilmaterial weniger als 70 Gew.-% beträgt.

8. Laminatverbundmaterial nach mindestens einem der Ansprüche 1 bis 7, **dadurch gekennzeichnet, dass** der Gehalt an Naturfaser in den Schichten aus Textilmaterial über 40 Gew.-% beträgt.

9. Laminatverbundmaterial nach mindestens einem der Ansprüche 1 bis 8, **dadurch gekennzeichnet, dass** die Dicke der Holzschicht im Bereich von 0,5 mm bis 4 mm liegt.

10. Laminatverbundmaterial nach mindestens einem der Ansprüche 1 bis 9, **dadurch gekennzeichnet, dass** die Dichte jeder der Zwischenschichten aus Holz, der ersten Schicht aus Textilmaterial und der zweiten Schicht aus Textilmaterial im Bereich von 200 bis 1200 g/m² liegt.

11. Laminatverbundmaterial nach mindestens einem der Ansprüche 1 bis 10, **dadurch gekennzeichnet, dass** es eine zweite Zwischenschicht aus Holz und eine dritte Schicht aus Textilmaterial umfasst, wo die zweite Zwischenschicht aus Holz zwischen der zweiten Schicht aus Textilmaterial und der dritten Schicht aus Textilmaterial liegt.

12. Laminatverbundmaterial nach Anspruch 11, **dadurch gekennzeichnet, dass** die zweite Zwischenschicht aus Holz mit mindestens einem Durchtritt versehen ist, der den beiden Schichten neben der zweiten Zwischenschicht aus Holz ermöglicht, miteinander in Kontakt zu treten.

13. Verfahren zur Herstellung eines Laminatverbundmaterials nach mindestens einem der Ansprüche 1 bis 12, **dadurch gekennzeichnet, dass** es umfasst: einen Schritt zum Ausbilden eines Stapels aus den mindestens zwei Schichten aus Textilmaterial und der mindestens einen Zwischenschicht aus Holz, einen Schritt zum Erhitzen des Stapels auf eine Temperatur im Bereich von 170 °C bis 240 °C und einen Schritt zum Pressen und Ausstanzen des erhitzten Stapels in einer Presse bei einem Druck über 80 bar.

14. Verfahren nach Anspruch 13, **dadurch gekennzeichnet, dass** es zusätzlich einen Schritt zum Ausstanzen des mindestens einen Durchtritts in mindestens einer der Holzschichten umfasst.

15. Verwendung eines Laminatverbundmaterials nach mindestens einem der Ansprüche 1 bis 12 zur Herstellung von Automobilkomponenten.

16. Verwendung nach Anspruch 15, **dadurch gekennzeichnet, dass** die Komponenten in der Gruppe enthalten sind, die gebildet ist durch Abtrennböden zwischen Fahrgastraum und Kofferraum, Kofferrauminnenauskleidungen, Türinnenauskleidungen und Seiteninnenauskleidungen.

## Revendications

1. Matériau stratifié du type comprenant une pluralité de couches de divers matériaux, **caractérisé en ce qu'**il comprend une couche intermédiaire en bois, une première couche d'une matière textile comprenant un mélange de fibre naturelle et de fibre de polyoléfine, et une deuxième couche d'une matière textile comprenant un mélange de fibre naturelle et de fibre de polyoléfine, dans lequel la couche intermédiaire en bois est située entre ladite première couche de matière textile et ladite deuxième couche de matière textile et dans lequel ladite couche intermédiaire en bois contient au moins un trou qui permet aux deux couches adjacentes à la couche intermédiaire en bois de faire mutuellement contact.

2. Matériau stratifié selon la revendication 1, **caractérisé en ce qu'**il comprend en outre au moins une couche de surface décorative de moquette ou de matière textile.

3. Matériau stratifié selon la revendication 1 ou 2, **caractérisé en ce qu'**il comprend en outre au moins une couche de surface en matière textile, d'une densité comprise dans une plage allant de 80 à 120 g/m².

4. Matériau stratifié selon au moins une des revendications 1 à 3, **caractérisé en ce que** entre au moins deux quelconques parmi lesdites couches se trouve un film polythène.

5. Matériau stratifié selon au moins une des revendications 1 à 4, **caractérisé en ce que** ladite fibre naturelle de ladite première couche et de ladite deuxième couche est du lin, du jute ou du coton, ou bien un mélange d'au moins deux de ces matières.

6. Matériau stratifié selon au moins une des revendications 1 à 5, **caractérisé en ce que** ledit matériau polyoléfine est du polypropylène.

7. Matériau stratifié selon la revendication 6, **caractérisé en ce que** la teneur en polypropylène desdites première et deuxième couche de matière textile est de moins de 70 % en poids.

8. Matériau stratifié selon au moins une des revendications 1 à 7, **caractérisé en ce que** la teneur en fibre naturelle desdites couches de matière textile est de plus de 40 % en poids.

9. Matériau stratifié selon au moins une des revendications 1 à 8, **caractérisé en ce que** l'épaisseur de ladite couche de bois est comprise dans une plage allant de 0,5 mm à 4 mm.

10. Matériau stratifié selon au moins une des revendications 1 à 9, **caractérisé en ce que** la densité de chacune desdites couche intermédiaire en bois, première couche de matière textile et deuxième couche de matière textile est comprise dans une plage allant de 200 à 1200 g/m².

11. Matériau stratifié selon au moins une des revendications 1 à 10, **caractérisé en ce qu'**il comprend une deuxième couche intermédiaire en bois et une troisième couche de matière textile, dans lequel ladite deuxième couche intermédiaire en bois est située entre la deuxième couche de matière textile et la troisième couche de matière textile.

12. Matériau stratifié selon la revendication 11, **caractérisé en ce que** ladite deuxième couche intermédiaire en bois contient au moins un trou qui permet aux deux couches adjacentes à ladite deuxième couche intermédiaire en bois de faire mutuellement contact.

13. Procédé pour la fabrication d'un matériau stratifié selon au moins une des revendications 1 à 12, **caractérisé en ce qu'**il comprend une étape consistant à former un empilement desdites au moins deux couches de matière textile et de ladite au moins une couche intermédiaire en bois, une étape consistant à chauffer l'empilement à une température comprise dans une plage allant de 170° C à 240° C, et une étape consistant à presser et à découper à l'emporte-pièce ledit empilement chauffé dans une presse à une pression de plus de 80 bar.

14. Procédé selon la revendication 13, **caractérisé en ce qu'**il comprend en outre une étape consistant à découper à l'emporte-pièce ledit au moins un trou dans au moins une desdites couches de bois.

15. Utilisation d'un matériau stratifié selon au moins une des revendications 1 à 12 pour fabriquer des composants automobiles.

16. Utilisation selon la revendication 15, **caractérisée en ce que** lesdits composants sont compris dans le groupe formé par des casiers séparés entre le compartiment passagers et le coffre, des doublures de coffre internes, des doublures de portes internes et des doublures latérales internes.
